# FASCICULE DE BREVET EUROPEEN

(11) **EP 0 434 746 B1**
(45) Date de publication et mention de la délivrance du brevet: **21.07.1993**
(21) Numéro de dépôt: 89910872.4
(22) Date de dépôt: 13.09.1989
(51) Int. Cl.: A47J 39/02

(54) **DISPOSITIF DE STOCKAGE ET DE RECHAUFFEMENT DE DENREES ALIMENTAIRES**
ANORDNUNG ZUM LAGERN UND ZUM AUFWÄRMEN VON NAHRUNGSMITTELN
DEVICE FOR STORING AND HEATING FOOD PRODUCTS

(30) Priorité: 14.09.1988 FR 8812073
(43) Date de publication de la demande: 03.07.1991
(73) Titulaire: GRANDI, René, F-38300 Bourgoin-Jallieu (FR)
(72) Inventeur: GRANDI, René, F-38300 Bourgoin-Jallieu (FR)
(74) Mandataire: Roman, Michel
(86) Numéro de dépôt international: FR8900461
(87) Numéro de publication internationale: WO9002509

(56) Documents cités:
- EP-A- 0 046 414
- FR-A- 2 285 836
- FR-A- 2 386 291
- US-A- 3 291 546
- US-A- 4 167 983

## Description

Dans les dispositifs connus de ce genre, on utilise des plateaux avec des résistances intégrées, qui ont l'inconvénient d'être d'un prix très élevé, de plus ces plateaux sont lourds et on ne peut utiliser des plateaux à jeter. D'autre dispositifs comportent des barrières thermiques séparant les produits à être réchauffés et les produits réfrigérés, mais ces barrières thermiques ne fonctionnent pas individuellement pour chaque plateau, mais toutes ensemble dans le dispositif et pour tous les plateaux à la fois. Ce qui a pour inconvénient de devoir chauffer tous les plateaux à la fois, donc de ne pas chauffer en plateau individuellement selon les besoins et de la garder en attente dans un milieu réfrigéré.

Ces derniers dispositifs peuvent convenir pour la distribution collective de repas en plateaux, au même moment, car on en peut avoir la possibilité de maintenir les plats en attente de chauffe dans un milieu réfrigéré, sans avoir à retirer le plateau, avant sa remise en température et sa distribution, bien même que les résistances soient individuelles, la chaleur de celle-ci est communiquée aux plateaux voisins.

Le froid ventilé étant à ce moment là arrêté, on a donc rapidement une montée en température dans le milieu réfrigéré, bien même que la résistance de la totalité des plateaux n'étant pas sous tension. Le brevet FR-A-2.285.836 décrit un système constitué d'une enceinte réfrigérée contenant des supports pour plateaux repas équipés de zones chauffantes pour réchauffer sélectivement certains plats à un moment choisi. Ces zones chauffantes, une fois le plateau repas retiré, ne se refroidissent pas instantanément, et les calories résiduelles doivent être compensées par un apport supplémentaire de frigories, ce qui diminue le rendement global de l'installation.

Le dispositif suivant l'invention supprime tous ces inconvénients et permet d'utiliser d'une part des plateaux à jeter en plastique ABS carton polystyrène ou tous autres produits "éphémères", et d'autre part permet de réchauffer individuellement ou ensemble chaque plateau à la fois.

Le dispositif suivant l'invention est constitué d'une enceinte réfrigérée dans laquelle sont placés en étagères des support-chauffants destinés à recevoir des plateaux contenant un repas complet avec des produits devant rester en froid et un ou deux plats destinés à être réchauffés Chaque support-chauffant comporte sur une ou deux parties, une résistance permettant de chauffer la zone du plateau placé sur ce support-chauffant.
Cette résistance est recouverte d'une barrière thermique mobile et horizontale qui est poussée par l'introduction du plateau sur le support-chauffant, découvrant ainsi la résistance qui peut alors se mettre sous tension selon l'information qui lui aura été donnée par le pupitre électronique, pour chauffer le plat prédestiné.
Lorsque l'utilisateur aura retiré le plateau, la barrière thermique revient recouvrir la résistance et cloisonner la chaleur résiduelle produite, évitant ainsi que ces calories ne se répandent dans l'enceinte réfrigérée.
Au moment de ce cloisonnement il est évident que la résistance n'est plus sous tension.
Cette barrière thermique est constituée d'une forte isolation thermique à haute densité, son aller et retour devant être aisé, une mortaise de chaque côté avec des ressorts permet de ramener la barrière thermique sur la résistance lors lors du retrait du plateau.

Les phases de conditionnement de l'enceinte réfrigérée s'effectuent ainsi:
1°) Par l'introduction des plateaux sur leur support, manuellement ou par un chariot ou "rack" où sont déja gerbés les plateaux et le support chauffant.
2°) En glissant sur le support le plateau vient par un buttoir pousser la barrière thermique et l'escamoter, en compressant les ressorts de détente.
   Le plateau est alors définitivement positionné, et une encoche ou crochet située sur le devant du support-chauffant empêche le plateau de revenir en arrière.
3°) Chaque plateau reste ainsi dans l'enceinte réfrigérée et ventilée, tous les produits restent en froid positif, ainsi que les produits qui sont en attente d'être réchauffés, qui sont recouverts d'une cloche-couvercle très isolante, et servant également de barrière thermique entre le plat chaud et l'ambiance fraîche de l'enceinte réfrigérée.
   Néanmoins, les plateaux pouvant être introduits plusieurs heures avant la mise en chauffe du plat prédestiné à être chauffé, l'ensemble des produits situés sur ce plateau aussi bien les produits frais (hors d'oeuvres, desserts etc.. ) que le plat à réchauffer, sont conservés en froid dans de bonnes conditions pour éviter le développement des bactéries.
4°) La zone de chauffe attend de recevoir l'information de la commande électronique du pupitre, concernant chaque plateau, pour mettre sous tension les résistances électriques dans le support-chauffant découvert par la barrière thermique.
   Les temps et la température étant préalablement sélectionnés sur le pupitre de l'enceinte réfrigérée.
   Des contacteurs situés sur le support-chauffant empêchent les résistances de chauffer hors la présence du plateau, bien même qu'interviendrait une fausse manoeuvre par la pendule électrique.
   Des iodes, témoins de chauffe, placées sur le support permettent également le contrôle de cette chauffe.
   Pendant le chauffage des aliments situés sous la cloche du plateau, les autres produits du plateau restent réfrigérés par le système général de l'enceinte.
   Chaque résistance est auto-régulée, une fois que la barrière thermique est escamotée et que le plateau est positionné. Pour éviter la transmission de la chaleur aux produits frais et à l'enceinte réfrigérée, la zone de chauffe est fortement isolée soit dans la cloche-couvercle,, soit sous les résistances et autour du support plateau.
   Cette isolation se fera par des produits hautement isolants, séparant aussi la zone de chauffe et la zone de froid.
   Les perditions de chaleur qui pourraient intervenir seraient recyclées et réfrigérées par le dispositif particulier de restitution des frigories de l'enceinte réfrigérée.
5°) au moment où on retire le ou les plateaux, la barrière thermique se trouve libérée et revient par son ressort recouvrir et cloisonner la zone de chauffe du support-plateau, empêchant les calories restantes de se diffuser dans l'enceinte réfrigérée, bien même que la résistance ne soit plus sous tension, et afin de ne pas nuire aux produits restant en froid sur les autres plateaux de l'enceinte réfrigérée.
   Le retour de la barrière thermique permet par le contacteur situé sur le support-chauffant de couper l'alimentation électrique de la résistance, ceci étant une sécurité en plus de l'information donnée par la pendule électronique.
6°) Une fois le plateau retiré, la barrière thermique revenant recouvrir la résistance, découvre un orifice qu'elle obstruait par un ergot, alors qu'elle était poussée et escamotée.
   Cet orifice servant à l'évacuation des calories résiduelles confinées entre la barrière thermique et le support plateau. Cet orifice débouche et libère ses calories par un tube à l'extérieur de l'enceinte réfrigérée et du chariot.

Les dessins ci-annexés qui illustrent l'invention sont donnés à titre d'exemple non limitatif d'une des formes de réalisation de l'objet de cette invention.

La figure 1 représente le plateau seul, en coupe et de côté.

La figure 2 représente le support-chauffant seul en coupe et de côté.

La figure 3 représente le plateau glissant sur le support-chauffant, en coupe et de côté.

La figure 4 représente en coupe et de côté le plateau positionné sur le support-chauffant.

La figure 5 représente le support-chauffant vu de dessus, avec deux barrières thermiques recouvrant les résistances électriques.

La figure 6 représente le support-chauffant vu de dessus avec les barrières thermiques escamotées par la présence du plateau (non représenté) découvrant les résistances électriques.

La figure 7 représente l'enceinte réfrigérée avec quelques exemples de support-chauffants et de plateaux Il est également représenté sur cette figure un chariot comportant quelques exemples de support-chauffant et de plateaux, en cours d'introduction dans l'enceinte réfrigérée.

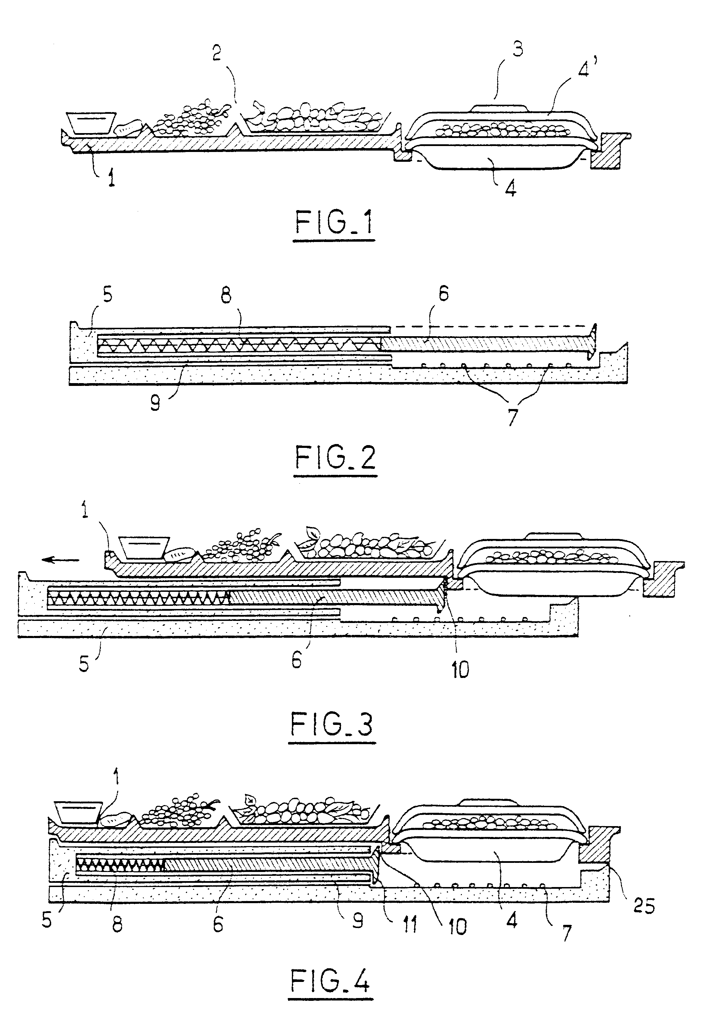

Le plateau 1 représenté sur la fig. 1 comporte la zone 2 avec les produits restant toujours refrigérés, et la zone 3 comportant un plat 4 et sa cloche-couvercle 4' où les produits sont destinés à être réchauffés à un certain moment déterminé.

La figure 2 comporte le support-chauffant 5 hors la présence du plateau. La barrière thermique 6 recouvre les résistances électriques 7, les ressorts 8 permettent l'escamotage et le retour de la barrière thermique lorsque le plateau est retiré.
L'orifice 9 permet l'évacuation de la chaleur résiduelle lorsque la barrière thermique 6 est venue recouvrir les résistances électriques.

Sur la fig.3, le plateau 1 est en cours d'introduction sur le support-chauffant 5, et vient pousser par un buttoir 10, la barrière thermique 6 qui vient s'escamoter dans le support-chauffant.

La figure 4 comporte le plateau 1 complètement positionné sur le support-chauffant 5, les ressorts 8 sont compressés par la barrière thermique 6 totalement escamotée. Une encoche ou crochet 25 située sur le support-chauffant empêche le plateau de revenir en arrière.
Un ergot 11 situé sur la barrière thermique, vient obstruer l'orifice 9 d'évacuation des calories, afin que celles-ci ne s'échappent lors de la mise en chauffe du plat 4.

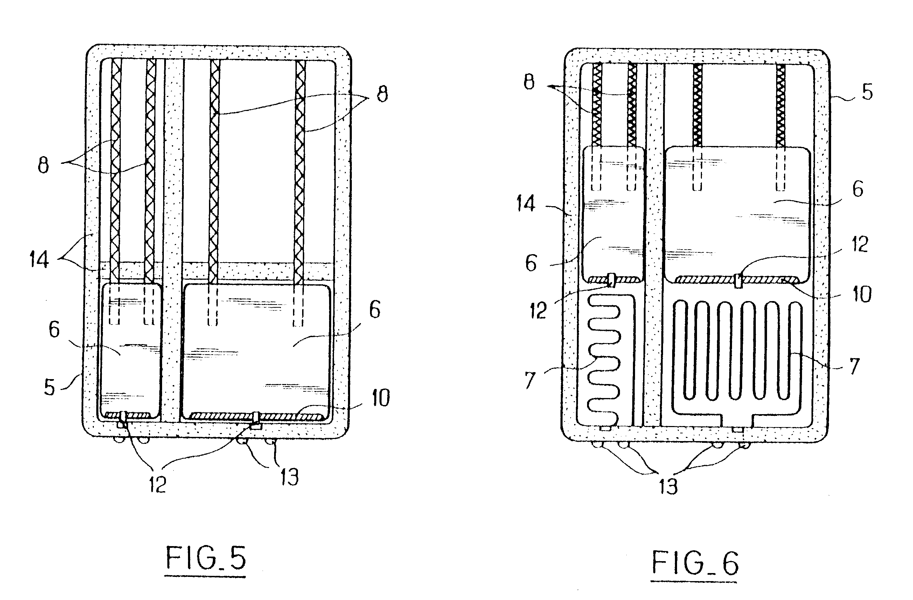

Sur la figure 5, les barrières thermiques 6 du support-chauffant 5, recouvrent les résistances des deux zones de chauffe. Les ressorts 8 sont détendus. Des contacteurs 12 situés sur les barrières thermiques 6, et sur la périphérie du support-chauffant 5 indiquent la non-présence du plateau, ceci étant une sécurité afin que les résistances ne soient plus sous tension.
Des témoins lumineux 13, permettent le contrôle de la zone de chauffe.
Une forte isolation adéquate 14 sépare les zones de froid des zones de chauffe.

Les barrières thermiques 6 du support-chauffant 5 de la figure 6, sont poussées par le plateau 1 (non représenté, à l'aide des buttoirs 10, les ressorts 8 sont totalement compressés. Les résistances 7 sont en possibilité de chauffe selon les informations qui auront été programmées.

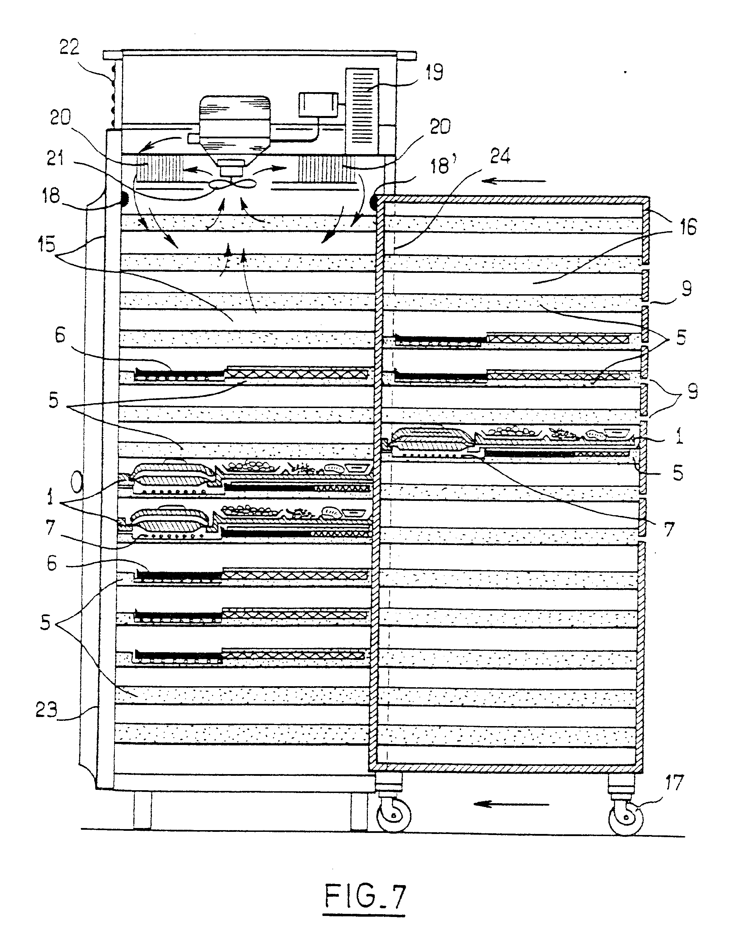

Sur la figure 7, sont représentés l'enceinte réfrigéréé 15 et le chariot 16 ou "rack", prêt à être introduit dans l'enceinte réfrigérée.
On peut utiliser soit l'enceinte réfrigérée seule, soit accompagnée du chariot 16 ou "rack".
Les support-chauffants 5 dans l'enceinte réfrigérée sont à demeure, et prêts à recevoir les plateaux 1. Ces plateaux sont introduits manuellement sur leur support-chauffant 5 un à un, la barrière thermique 6 est ainsi poussée et escamotée, suivant l'invention qui vient d'être décrite, et l'ensemble reste en attente de l'information donnée sur un pupitre 22 situé sur l'enceinte réfrigérée, pour que la résistance 7 du support-chuaffant 5 se mette sous tension.
En utilisant le chariot 16, ce dernier est préalablement équipé des support-chauffants 5, sur lesquels sont également gerbés les plateaux 1, l'ensemble chariot, support-chauffants et plateaux sont ainsi introduits au moyen de roulettes 17, dans l'enceinte réfrigérée 15, qui est alors vide et totalement dépourvue de rayonnages.
Des contacteurs 18 et 18' situés dans l'enceinte et sur le chariot, permettent de faire le contact électrique afin que les résistances 7 puissent se mettre en chauffe.

L'utilisation du chariot permet d'avoir l'avantage de pouvoir charger l'enceinte réfrigérée, aussi bien par l'avant 23 de cette enceinte que par l'arrière 24. Le chargement par l'arrière 24, ne gênant pas le dégagement de l'ouverture avant 23 de l'enceinte, permettant à l'utilisateur un service plus aisé. Le chariot peut même être stocké et mis en chauffe dans une chambre froide traditionnelle.

Un compresseur 19 produit la réfrigération de l'enceinte, le froid est ventilé et propulsé par des turbines 20, l'air est ensuite aspiré 21 puis recyclé en permanence par les turbines 20.
L'ensemble du groupe de froid est situé sur l'enceinte réfrigérée, et il en cas de panne celui-ci peut ôté facilement pour la réparation ou pour interchanger.

Toutefois les formes, ,les dispositions ainsi que les moyens mis en oeuvre peuvent varier dans la limite des équivalents, sans pour cela charger l'esprit et la conception de l'invention qui vient d'être décrite.

## Revendications

1. Dispositif de stockage et de réchauffement de denrées alimentaires dans un enceinte réfrigérée équipée de support-chauffants (5) individuels pour plateaux repas (1), caractérisé par un support-chauffant (5) dans lequel sont logées une ou des résistances électriques (7), celles-ci étant recouvertes d'une barrière thermique isolante (6) horizontale et mobile, s'escamotant dans l'autre partie du support-chauffant (5) en subissant une poussée lors de l'introduction d'un plateau-repas (1) destiné à être consommé.

2. Dispositif suivant la revendication 1, caractérisé par le fait qu'en introduisant le plateau (1), en le faisant glisser sur le support-chauffant (5), il vient pousser la barrière thermique (6) par un buttoir (10) découvrant les résistances électriques (7) afin qu'elles puissent chauffer au moment pré-établi le plat (4) positionné dans la zone de chauffe (3) du plateau.

3. Dispositif suivant les revendications 1 et 2, caractérisé en ce que la barrière thermique (6) étant poussée, elle vient compresser des ressorts (8) situés dans le support-chauffant (5) et sur un côté de la barrière thermique. Lorsque l'on aura retiré le plateau (1), ces ressorts viendront se détendre, permettant à la barrière thermique de revenir couvrir les résistances électriques (7) et cloisonner ainsi les calories résiduelles de la mise en chauffe du plat, afin de ne pas nuire aux produits restant en froid sur les autres plateaux restant dans l'enceinte réfrigérée.

4. Dispositif suivant la revendication 2, caractérisé en ce que la barrière thermique (6) en revenant recouvrir les résistances électriques (7), découvrant un orifice (9) qu'elle obstruait par un ergot (11), afin que les calories résiduelles confinées sous la barrière thermique soient évacuées hors de l'enceinte réfrigérée (15).

## Patentansprüche

1. Vorrichtung zum Aufbewahren und Wärmen von Nahrungsmitteln in einem gekühlten Behältnis, versehen mit individuellen Heizplatten (5) für Imbißtabletts (1), gekennzeichnet durch eine Heizplatte (5), in der ein oder mehrere elektrischen Heizwiderstände (7) angeordnet sind, wobei diese durch eine horizontal bewegliche, isolierende Wärmesperre (6) abgedeckt sind, welche bei Einführung eines für den Konsum bestimmten Imbißtabletts (1) durch eine Schubkraft in den weiteren Teil der Heizplatte (5) eingefahren werden kann.

2. Vorrichtung nach dem Anspruch 1, dadurch gekennzeichnet, daß das durch Gleiten auf der Heizplatte (5) eingeführte Imbißtablett (1) die Wärmesperre (6) mittels eines Puffers (10) einfährt und dabei die elektrischen Heizwiderstände (7) freigibt, damit diese zum vorbestimmten Zeitpunkt das im Heizbereich (3) des Imbißtabletts befindliche Tellergericht (4) erwärmen können.

3. Vorrichtung nach den Ansprüchen 1 und 2, dadurch gekennzeichnet, daß die eingefahrene Wärmesperre (6) die in der Heizplatte (5) und auf einer Seite der Wärmesperre befindlichen Federn (8) zusammendrückt. Sobald das Imbißtablett (1) entnommen wird entspannen sich die Federn und schieben die Wäremsperre über die Heizwiderstände (7) wodurch diese die Abschirmung der vom Erwärmen des Tellergerichts verbleibenden Restwärme ermöglicht, um die auf den anderen Tabletts im Behältnis befindlichen gekühlten Produkte nicht zu schädigen.

4. Vorrichtung nach Anspruch 2, dadurch gekennzeichnet, daß die Wärmesperre (6) beim Rückfahren über die Heizwiderstände (7) eine durch eine an der besagten Wärmesperre angebrachten Nase (11) verschlossene Öffnung (9) freigibt, durch welche die unter der Wärmesperre verbliebene Restwärme aus dem gekühlten Behältnis (15) herausgeführt wird.

## Claims

1. System for storage and heating of foodstuffs in a refrigerated container equipped with individual heating supports (5) for food trays (1), characterized by a heating support (5) in which are housed one or several electrical heating resistances (7), these being covered by a horizontal and mobile insulating thermal barrier (6), retracting into the other part of the heating support (5) by force when introducing a meal-tray (1) for consumption.

2. Device as per claim 1 characterized by the fact that by introducing the tray (1) by sliding it on the heating support (5), it pushes the thermal barrier (6) by a stop (10) uncovering the electrical resistances (7) so that they can heat the dish (4) in the tray heating zone (3) at a preestablished time.

3. Device as per claim 1 and 2, characterized in that the thermal barrier (6) when pushed, compressed the springs (8) situated in the heating support (5) and on one side of the thermal barrier. When the tray is withdrawn (1), the springs are released and allow the thermal barrier to return and cover the electrical resistances (7) and thereby partition the residual heat used to heat the dish so that this will not prejudice the products remaining in the cold zone on the other trays in the refrigerated container.

4. Device as per claim 2 characterized in that the thermal barrier (6) when returning to cover the electrical resistances (7) uncovers an orifice (9) which it obstructed by stop pin (11) so that the residual heat confined under the thermal barrier will be evacuated outside the refrigerated container (15).
